# EUROPEAN PATENT APPLICATION

(11) **EP 4 517 578 A1**
(43) Date of publication of application: **05.03.2025**
(21) Application number: 24191422.5
(22) Date of filing: 29.07.2024
(51) Int. Cl.: G06F 40/30

(54) **COMPUTING SYSTEM FOR EVALUATING A PRODUCT REQUIREMENT**

(30) Priority: 01.09.2023 US 202318460424
(71) Applicant: The Boeing Company, Arlington, VA 22202 (US)
(72) Inventor: Wardlaw, William Scott, Arlington VA, 22202 (US)
(74) Representative: Witte, Weller & Partner Patentanwälte mbB

(57) **Abstract**

A computing system (100, 200) for evaluating a product requirement (26) is provided, including a processor (12) configured to store input text (24) of the product requirement (26). The processor is configured to identify a requirement type (50) for the input text (24) from among a plurality of candidate requirement types and determine a plurality of required elements (60) for the identified requirement type (50) from among a plurality of candidate elements, using a predefined requirements rubric (48). The processor (12) is further configured to perform natural language processing on the input text (24) to apply tags (56) from a predefined tagset (58) to respective portions of the input text (24) to generate tagged input text (58). The processor (12) is further configured to apply predefined element identification rules (64) to the tagged input text (58) to identify a presence or absence of each required element (60) in the input text (24) for the product requirement (26) and output an indication (74) of the identified presence or absence of each required element (60).

## Description

The field of invention relates generally to requirements for products and services and, in particular, to tools for helping a writer of a product requirement to evaluate the product requirement.

### BACKGROUND

Written product requirements are used to establish and communicate various characteristics of items. For example, an acquirer may establish requirements to communicate the characteristics of items to be acquired to a supplier. The supplier may use the requirements to design, develop, and manufacture the items or otherwise provide the items to the acquirer. For less complex products, such as consumer products, product requirements may need only define the performance or other characteristics of a relatively small number of component parts of the product. However, more complex products, such as aerospace vehicles, may comprise millions of parts and components. Drafting high-quality product requirements for such complex products may be far more complicated. Poorly drafted requirements may result in higher costs, longer schedules, and greater performance risks for more complex products.

Product requirements that are erroneous, incomplete, or ambiguous can adversely affect the design, manufacturing, and testing of items. For instance, such requirements may lead to items that do not meet expectations or requirements. These items may require redesigning and remanufacturing at significant cost. The cancellation of many programs for the development of commercial and military air and space vehicles over the last decade is evidence of this. Therefore, it is essential to review and identify missing information and errors in product requirements effectively.

### SUMMARY

In view of these issues, a computing system for evaluating a product requirement is provided. According to one aspect, the computing system comprises a processor coupled to a memory that stores instructions, which, upon execution by the processor, cause the processor to store input text of the product requirement. The processor is further configured to identify a requirement type for the input text from among a plurality of candidate requirement types. The processor is further configured to determine a plurality of required elements for the identified requirement type from among a plurality of candidate elements, using a predefined requirements rubric. The processor is further configured to perform natural language processing on the input text, using a natural language processing model, to thereby apply one or more tags from a predefined tagset to respective portions of the input text to generate tagged input text. The processor is further configured to apply one or more predefined element identification rules to the tagged input text, to thereby identify a presence or absence of each of the plurality of required elements in the input text for the product requirement. The processor is further configured to output an indication of the identified presence or absence of each of the plurality of the required elements in the product requirement.

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter. Furthermore, the claimed subject matter is not limited to implementations that solve any or all disadvantages noted in any part of this disclosure.

### BRIEF DESCRIPTION OF THE DRAWINGS

FIG. 1 shows a schematic view of an example computing system for evaluating a product requirement according to one example implementation of the present disclosure.
FIG. 2 shows a schematic view of an example GUI including input text of the product requirement along with an identified requirement type.
FIG. 3 shows an example predefined requirements rubric.
FIG. 4 shows an example predefined tagset and example tagged input text.
FIG. 5 shows a schematic view of an example GUI including the identified requirement type, an indication of presence or absence of each of required elements in the product requirement, and a score for the input text.
FIG. 6 shows a schematic view of an example GUI of the indication including a report with a graph that indicates the identified presence or absence of each of the plurality of the required elements in the product requirement and non-compliance of one or more predefined element identification rules.
FIG. 7 shows a flowchart of a computerized method for evaluating a product requirement according to one example configuration of the present disclosure.
FIG. 8 schematically shows an example computing environment in which the computing system of FIG. 1 is instantiated.

### DETAILED DESCRIPTION

As discussed above, identifying missing information and errors in product requirements contributes to the success of the development of complex products. However, current systems and methods for reviewing product requirements and identifying missing information have a manual process by which human reviewers check for missing information in product requirements. These human reviews are time-consuming and often ineffective in identifying missing information.

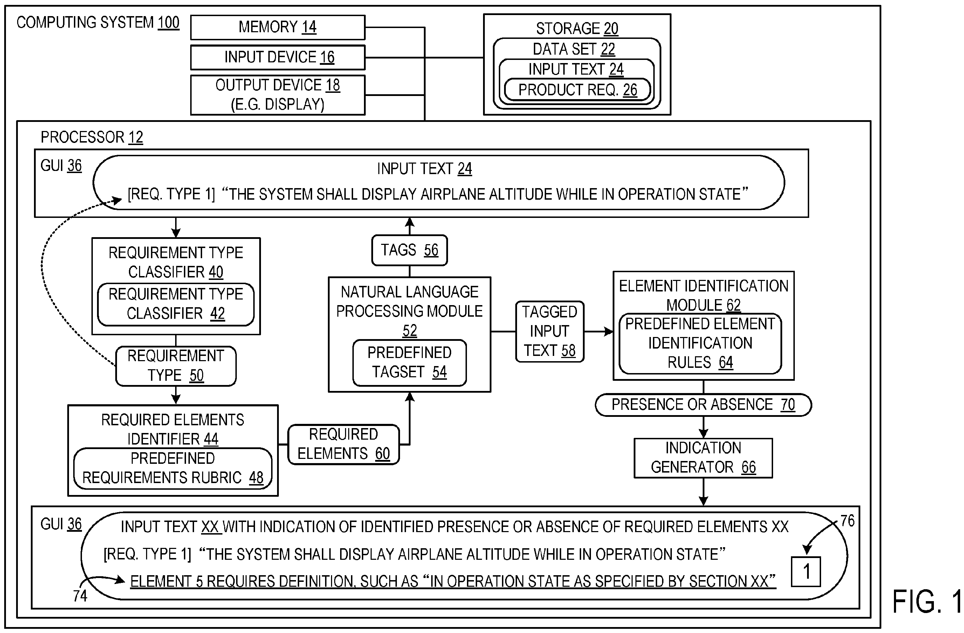

To address the issues identified above, computing systems and computerized methods for evaluating a product requirement are disclosed herein. FIG. 1 shows a computing system 100 for evaluating a product requirement that includes a processor 12 coupled to a memory 14 that stores instructions, which, upon execution by the processor, cause the processor 12 to perform certain functions as described below. In the depicted configuration, the computing system 100 may include the processor 12, memory 14, and storage 20, which may be operatively coupled to each other by a communications bus. The processor 12, memory 14, and storage 20 may each be configured as one or more physical components such as one or more processor cores and/or one or more physical memory modules. The storage stores the instructions for the various software components described herein as being executed by the processor 12 and also stores data set 22 used by those software components, in a non-volatile manner. The computing system 100 may further include an input device 16, which may be a keyboard, a mouse, a touchscreen, a trackpad, an accelerometer, a microphone, or some other suitable type of input device. In addition, the computing system 100 may further include an output device 18, which may be a display, a speaker, or some other suitable type of output device. The computing system 100 may be any type of a variety of types of computing devices, such as a laptop, desktop, or server. Furthermore, the computing system 100 may be one of a plurality of server devices in a data center, and the processor 12 may be one processor of a single server device or multiple processors of multiple server devices.

Upon execution by the processor 12, the instructions stored in the memory 14 cause the processor 12 to store input text 24 of the product requirement in the storage 20. The product requirement 26 may be a written description of a mandatory or other (e.g., optional) characteristic of a system, service, or other product or item. The product requirement 26 may be a product requirement for a target aerospace component, and the product requirement may be selected from the group consisting of government rules, regulations, and contract requirements. The product requirement typically includes natural language text. Thus, the input text 24 of the product requirement 26 may be generated by an operator in natural language. For example, without limitation, the input text 24 may be in the form of a statement in natural language, which is a language used by humans to communicate with each other. The processor 12 is configured to display the input text 24 of the product requirement 26 on GUI 36. In the depicted example, the input text 24 includes and displays "The system shall display airplane altitude while in operation state" on the GUI 36.

Continuing with FIG. 1, the processor 12 is further configured to identify, via a requirement type classifier 40, a requirement type 50 for the input text 24 from among a plurality of candidate requirement types. The requirement type 50 describes characteristics of the product requirement. There may be a plurality of requirement types 50, examples of which are shown in the drawings as requirement type 1, requirement type 2, requirement type 3, and requirement type 4. In one example configuration, the plurality of candidate requirement types may be selected from the group consisting of a functional requirement, design requirement, environmental requirement, and suitability requirement. It will be appreciated that this list is not exhaustive and additionally or alternatively other requirement types may be used.

The functional requirement describes functional and performance behavior at the boundary of the item performing a required action or function. The functional requirement defines the input/output transformations at the boundary of the item. The functional requirement defines the output response to some input trigger or system state condition, both observable at the item boundary. The design requirement describes how to design or fabricate an item or its elements. The design requirement expresses mandatory characteristics concerning how to make a product or service, thereby constraining the design or fabrication of the item or its elements. The design requirement may capture lessons learned to achieve desired performance by using proven design solutions. The design requirement may address non-boundary items, such as parts, materials, and processes, and may provide a replacement for more complicated performance requirements. The design requirement may result from prior experience with similar systems when a developer is to include a particular feature in the design solution. The design requirement may include mandates on the use of specific legacy components or other non-developmental items.

The environmental requirement describes the exposed or generated environment through which an item must survive or function for all or part of its life cycle. The suitability requirement describes the safety, security, reliability, availability, maintainability, or other health characteristics of an item. The suitability requirement may also specify the allowable effect that the item may generate on the external environment. The suitability requirement may describe the degree to which a system or end item can be placed satisfactorily in field use, with consideration given to availability, compatibility, transportability, interoperability, reliability, use rates, maintainability, full-dimension protection, operational safety, human factors, architectural and infrastructure compliance, manpower supportability, logistics supportability, natural environmental effects and impacts, document and training requirements, and/or any other considerations either alone or taken into consideration together in any combination.

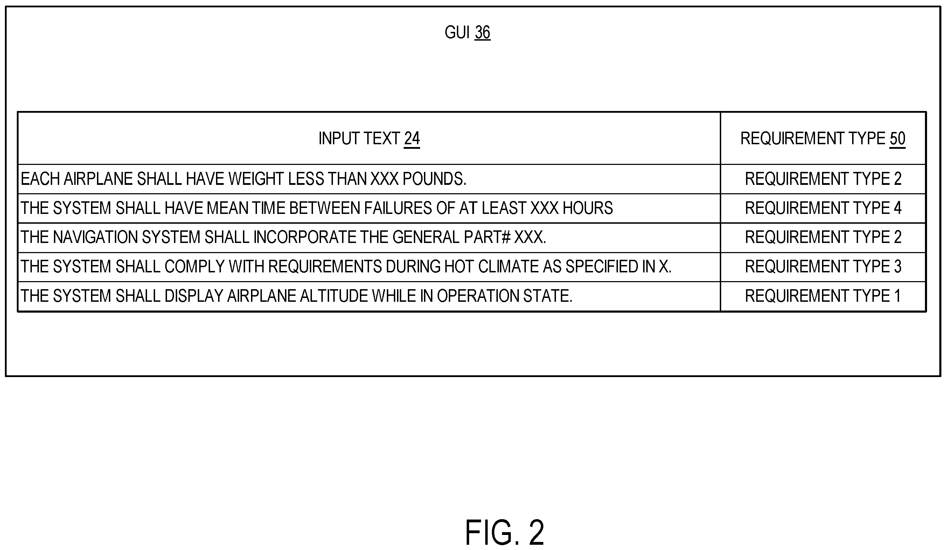

Continuing with FIG. 1, the requirement type 50 may be identified using the requirement type classifier 40 (i.e., a trained machine learning model) that has been trained using a training data set that includes the input text from historical product requirements and ground truth data indicating the requirement type 50 for each input text. The trained machine learning model may be a category classification model that can identify text entries with tags. It will be appreciated that the requirement type 50 also may be identified by a user based on the user's own knowledge and experience. In the depicted example, the identified requirement type 50 is "Requirement Type 1," as shown in the GUI 36. Briefly turning to FIG. 2, this figure shows a schematic view of an example GUI 36 including the input text 24 of the product requirement 26 along with the identified requirement type 50. As shown at FIG. 2, the requirement type 50 is identified for each input text 24. As discussed above, the requirement type 50 may be, for instance, a functional requirement, design requirement, environmental requirement, suitability requirement, or other requirement type.

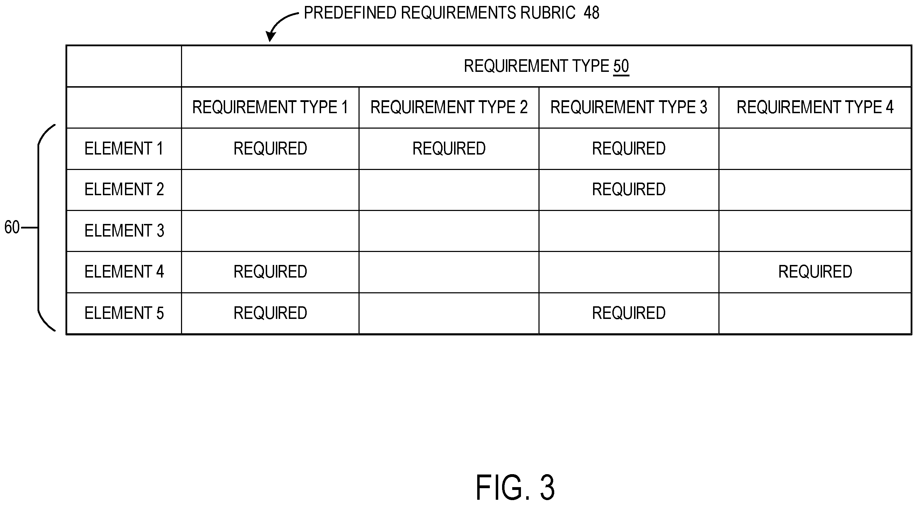

Turning back to FIG. 1, the processor 12 is further configured to determine a plurality of required elements 60 for the identified requirement type 50 from among a plurality of candidate elements, using a predefined requirements rubric 48. Turning briefly to FIG. 3, this figure shows an example predefined requirements rubric 48 that determines the required elements 60 for the required type 50. The predefined requirements rubric 48 shows one or more of the required elements 60 required for the required type 50. In the depicted example, Elements 1, 4, and 5 are required for Requirement Type 1, Element 1 is required for Requirement Type 2, Elements 1, 2, and 5 are required for Requirement Type 3, and Element 4 is required for Requirement Type 4. For example, without limitation, the plurality of required elements 60 may be selected from the group consisting of an agent element, function element, output element, performance element, timing element, and condition element. Thus, in the depicted example, Element 1 may be the agent element, Element 2 may be the function element, Element 3 may be the output element, Element 4 may be the timing element, and Element 5 may be the condition element.

The agent element identifies an item performing a required action or function or possessing a required characteristic. The function element describes the action or behavior of agent. The function element is what agent does that is observable at its boundary. The output element is the location where function can be observed and evaluated and associated constraints. The performance element is a measurable attribute of a function or design attribute which enables the determination of success or failure during verification of an item against requirement. The performance element is usually quantitative. The performance element describes the degree to which an application, system, or component accomplishes its designed functions within given constraints, such as speed, accuracy, or memory usage. The timing element is a statement of how soon or how long is necessary for behavior associated with state changes and trigger conditions. The condition element describes the circumstances under which agent is to perform an action or function. The condition element may include states, modes, environments, limitations, special conditions, configurations, or combinations thereof which affect or limit the applicability of a requirement. A state or mode is a condition or combination of conditions that occurs under defined circumstances.

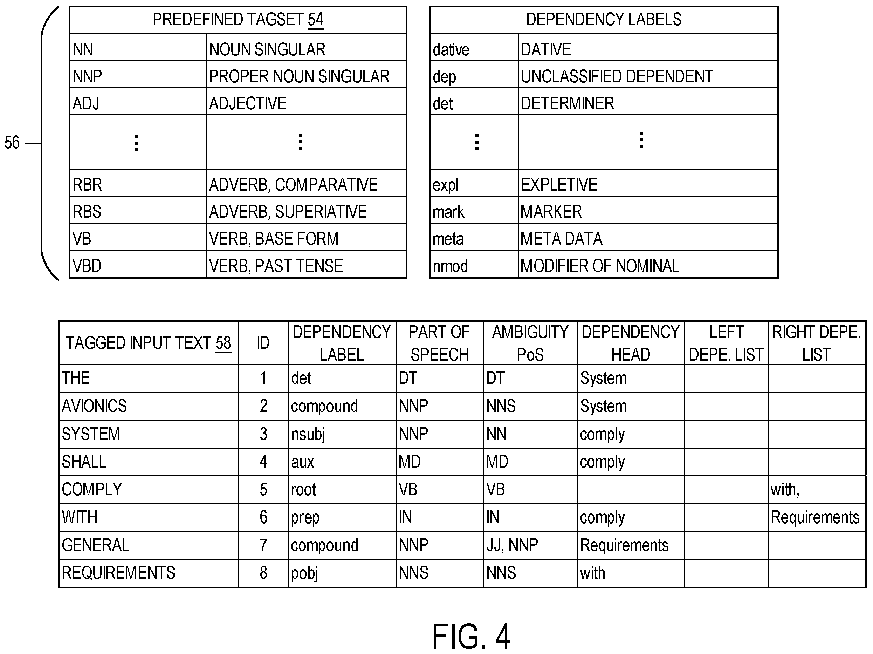

Turning back to FIG. 1, the processor 12 is further configured to perform, via a natural language processing module 52, natural language processing on the input text 24, using a natural language processing model, to thereby apply one or more tags 56 from a predefined tagset 54 to respective portions of the input text 24 to generate tagged input text 58. The natural language processing model may be one of the publicly available natural language processing models that performs part-of-speech (POS) tagging. Turning briefly to FIG. 4, this figure shows an example predefined tagset 54 and tagged input text 58. The predefined tagset 54 is the collection of tags 56 used for classifying words into parts of speech and tagging the input text 24 accordingly. As shown in the depicted example, NN (noun singular) and NNP (proper noun singular) are the tags for singular nouns, ADJ (adjective) is the tag for adjective, and VB and VBD are the tags for verb. The natural language processing module 52 applies one or more tags 56 from the predefined tagset 54 to each word of the input text 24 to generate the tagged input text, as shown in FIG. 4. For example, NNP (proper noun singular) is applied to "avionics" and "system" of the input text 24 and VB (verb, base form) is applied to "comply" of the input text 24. The natural language processing performed by natural language processing module 52 further includes a keyword replacement and/or keyword identification. The keyword identification identifies whether the input text 24 contains a predetermined keyword. For example, "shall" may be one of the predetermined keywords, and the natural language processing module 52 identifies whether the input text 24 contains "shall."

Turning back to FIG. 1, the processor 12 is further configured to apply, via an element identification module 62, one or more predefined element identification rules 64 to the tagged input text 58, to thereby identify a presence or absence of each of the plurality of required elements 60 in the input text 24 for the product requirement 26. The element identification module 62 identifies whether each of the plurality of required elements 60 (e.g., agent, function, condition) is present in the input text 24 according to the one or more predefined element identification rules 64. The one or more predefined element identification rules 64 may further include additional rules, for example, without limitation, an ordering rule, a singularity rule, and a keyword rule. For instance, the agent (element) as discussed above has to be singular according to the singularity rule. "Shall" needs to follow the agent (element) according to the ordering rule. "Shall," which is the predetermined keyword, must be present in the input text 24 according to the keyword rule.

The processor 12 is further configured to output an indication 74 of the identified presence or absence of each of the plurality of the required elements 60 in the product requirement 26. The processor 12 is further configured to output a score 76 along with the indication 74. The presence or absence of each of the plurality of required elements 60 is indicated by the score 76. In one example, a higher score can indicate presence and a lower score can indicate absence of each of the plurality of required elements 60. The score 76 may be a numerical value such as 1, 2, 3, 4, and 5 or a grade such as A, B, C, and D. In one example, the score may be a numerical value that indicates a level of ambiguity regarding whether a required element is present. In another example, the score may be a classification confidence value for a classification of the presence (or absence) of a required element. As shown in the depicted example of FIG. 1, the processor outputs feedback including the indication 74 of the identified presence or absence of each of the plurality of the required elements 60 in the product requirement 26 and the score 76 on the GUI 36. For instance, the feedback indicates that Element 5 (e.g., condition element) requires definition, such as "in operation state as specified by section XX," while the original input text merely states "in operation state." If the original text does not include "shall," which is one of the required predetermined keywords, the feedback may indicate that "shall" is missing. Furthermore, if the original text does not have "shall" after the agent element, the feedback may indicate that "shall" is not in a correct order. Further, in the depicted example, the score shows "1" out of 0-5, which indicates absence of one or more of the required elements 60.

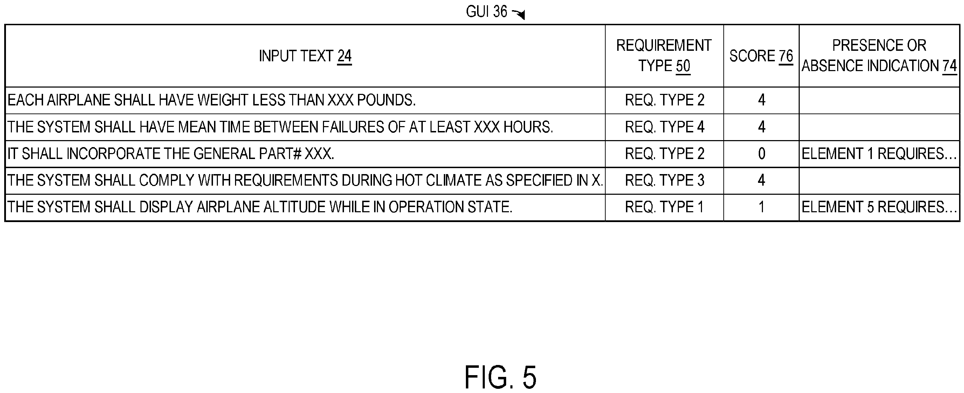

Turning briefly to FIG. 5, this figure shows a schematic view of an example GUI 36 including the identified requirement type 50, the indication 74 of presence or absence of each of required elements 60 in the product requirement 26, and the score 76 for the input text 24. It will be appreciated that the presence or absence may take other forms, such as an icon, code, element in a computer data file, audio indicator, etc.

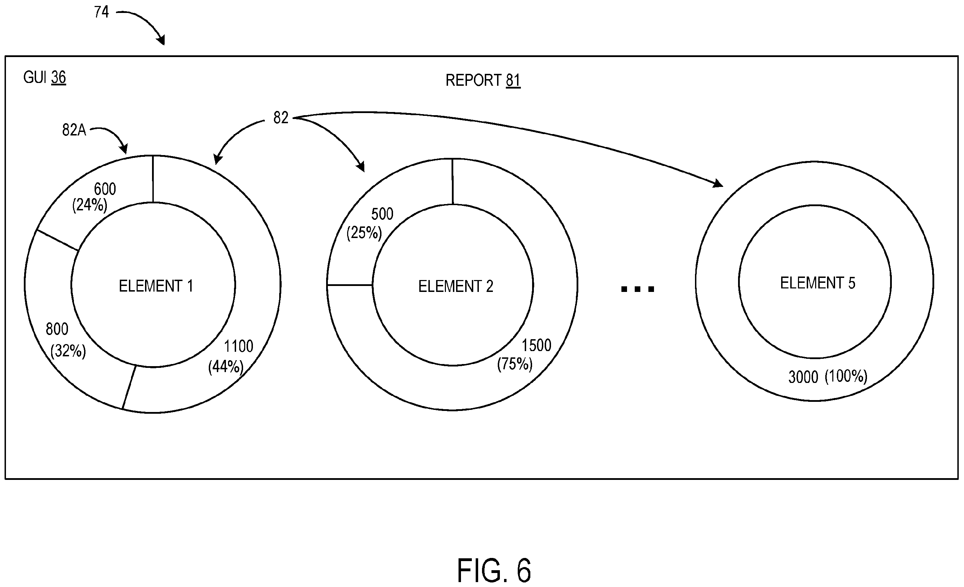

Turning to FIG. 6, this figure shows a schematic view of an example GUI 36 of the outputted indication 74 including a report 81 with a graph 82 that indicates the identified presence or absence of each of the plurality of the required elements 60 in the product requirement 26 and non-compliance of one or more predefined element identification rules 64. This presentation of information gives a human operator an overview of the status of a set of product requirements. As depicted in the example, the first graph 82A of the report 81 for Element 1 indicates that there are 1100 (44%) entries in the product requirements data set having a presence of each of the plurality of required elements 60 in the input text 24 for the product requirement 26 and 1400 (800 + 600) entries having an absence of each of the plurality of required elements 60, among which 800 (32%) of 2500 entries do not comply with one of the predefined element identification rules 64 (e.g., an ordering rule, a singularity rule, and a keyword rule) and 600 (24%) of 2500 entries do not comply with another of the predefined element identification rules 64. Similar graphs 82 are shown for Element 2 and Element 5, which will not be described in detail.

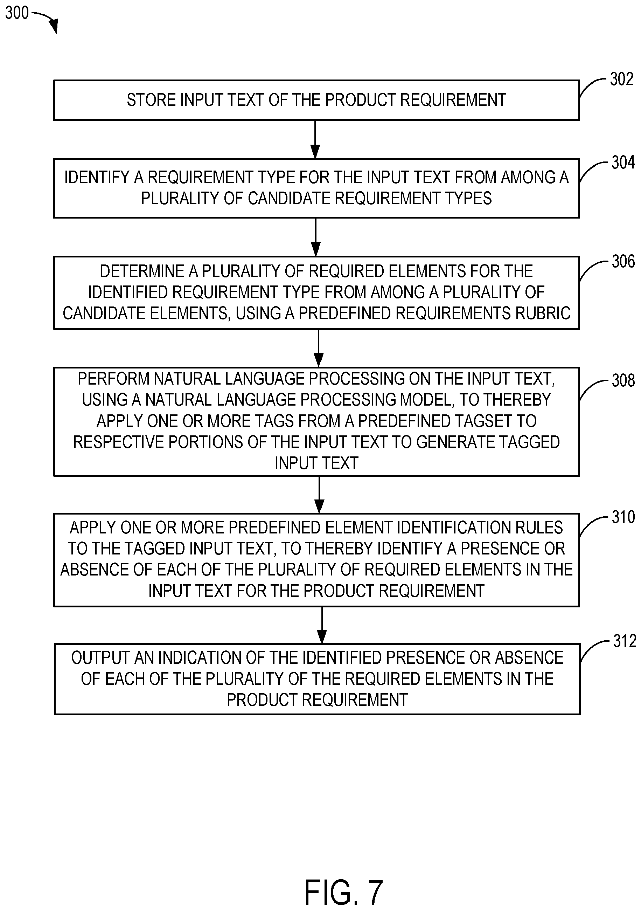

FIG. 7 is a flowchart of a computerized method 300 for evaluating a product requirement according to one example configuration of the present disclosure. Method 300 may be implemented using the computer hardware and software described above, or using other appropriate computer hardware and software.

At step 302, the method 300 may include storing input text of the product requirement. Proceeding from step 302 to step 304, the method 300 may include identifying a requirement type for the input text from among a plurality of candidate requirement types.

Advancing from step 304 to step 306, the method 300 may include determining a plurality of required elements for the identified requirement type from among a plurality of candidate elements, using a predefined requirements rubric.

Proceeding from step 306 to step 308, the method 300 may include performing natural language processing on the input text, using a natural language processing model, to thereby apply one or more tags from a predefined tagset to respective portions of the input text to generate tagged input text.

Continuing from step 308 to step 310, the method 300 may include applying one or more predefined element identification rules to the tagged input text, to thereby identify a presence or absence of each of the plurality of required elements in the input text for the product requirement.

At step 312, the method 300 may further include outputting an indication of the identified presence or absence of each of the plurality of the required elements in the product requirement.

The computing system 100 and method 300 described herein provide mechanisms for evaluating product requirements and identifying missing information. The computing system 100 and method 300 offer an automated process that checks each requirement for missing information and generates a report. This allows requirement authors to fix the requirements before human review, which not only brings the requirements up to quality standards but also saves time by eliminating the need for humans to manually check during review.

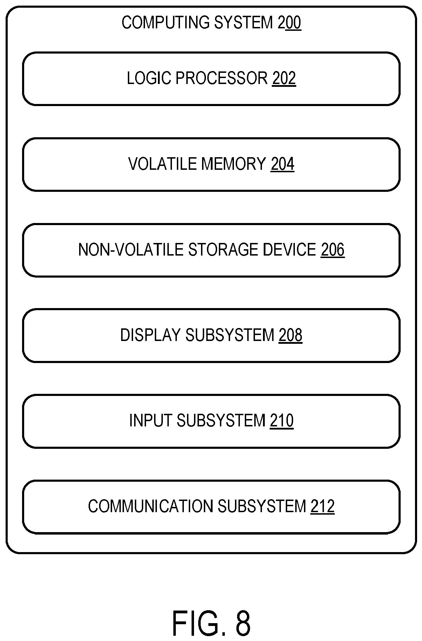

FIG. 8 schematically shows a non-limiting embodiment of a computing system 200 that can enact one or more of the methods and processes described above. Computing system 200 is shown in simplified form. Computing system 200 can embody the computing system 100 described above and illustrated in FIG. 1. Components of computing system 200 are, for example, included in one or more personal computers, server computers, tablet computers, home-entertainment computers, network computing devices, video game devices, mobile computing devices, mobile communication devices (e.g., smart phone), and/or other computing devices, and wearable computing devices such as smart wristwatches and head mounted augmented reality devices.

Computing system 200 includes a logic processor 202 volatile memory 204, and a non-volatile storage device 206. Computing system 200 optionally includes a display subsystem 208, input subsystem 210, communication subsystem 212, and/or other components not shown in FIG. 8.

Logic processor 202 includes one or more physical devices configured to execute instructions. For example, the logic processor 202 is configured to execute instructions that are part of one or more applications, programs, routines, libraries, objects, components, data structures, or other logical constructs. Such instructions are implemented to perform a task, implement a data type, transform the state of one or more components, achieve a technical effect, or otherwise arrive at a desired result.

The logic processor 202 includes one or more physical processors configured to execute software instructions. Additionally or alternatively, in some examples, the logic processor 202 includes one or more hardware logic circuits or firmware devices configured to execute hardware-implemented logic or firmware instructions. Processors of the logic processor 202 are single-core or multi-core, and the instructions executed thereon are configured for sequential, parallel, and/or distributed processing. Individual components of the logic processor 202 are optionally distributed among two or more separate devices, which in some examples are remotely located and/or configured for coordinated processing. In some examples, aspects of the logic processor 202 are virtualized and executed by remotely accessible, networked computing devices configured in a cloud-computing configuration. In such a case, these virtualized aspects are run on different physical logic processors of various different machines.

Non-volatile storage device 206 includes one or more physical devices configured to hold instructions executable by the logic processors to implement the methods and processes described herein. When such methods and processes are implemented, the state of non-volatile storage device 206 is transformed-e.g., to hold different data.

Non-volatile storage device 206 includes physical devices that are removable and/or built in. Non-volatile storage device 206 can include optical memory, semiconductor memory, and/or magnetic memory, or other mass storage device technology. Non-volatile storage device 206 can include nonvolatile, dynamic, static, read/write, read-only, sequential-access, location-addressable, file-addressable, and/or content-addressable devices. It will be appreciated that non-volatile storage device 206 is configured to hold instructions even when power is cut to the non-volatile storage device 206.

Volatile memory 204 includes physical devices that include random access memory. Volatile memory 204 is typically utilized by logic processor 202 to temporarily store information during processing of software instructions. It will be appreciated that volatile memory 204 typically does not continue to store instructions when power is cut to the volatile memory 204.

Aspects of logic processor 202, volatile memory 204, and non-volatile storage device 206 are, in some examples, integrated together into one or more hardware-logic components. Examples of such hardware-logic components include field-programmable gate arrays (FPGAs), program- and application-specific integrated circuits (PASIC / ASICs), program-and application-specific standard products (PSSP / ASSPs), system-on-a-chip (SOC), and complex programmable logic devices (CPLDs), for example.

The terms "module," "program," and "engine" are used to describe an aspect of computing system 200 typically implemented in software by a processor to perform a particular function using portions of volatile memory, which involves transformative processing that specially configures the processor to perform the function. Thus, a module, program, or engine can be instantiated via logic processor 202 executing instructions held by non-volatile storage device 206, using portions of volatile memory 204. It will be understood that different modules, programs, and/or engines can be instantiated from the same application, service, code block, object, library, routine, API, function, etc. Likewise, the same module, program, and/or engine can be instantiated by different applications, services, code blocks, objects, routines, APIs, functions, etc. The terms "module," "program," and "engine" can encompass individual or groups of executable files, data files, libraries, drivers, scripts, database records, etc.

A display subsystem 208 is used in some examples to present a visual representation of data held by non-volatile storage device 206. The visual representation, for example, takes the form of a graphical user interface (GUI). In such examples, as the herein described methods and processes change the data held by the non-volatile storage device, and thus transform the state of the non-volatile storage device, the state of display subsystem 208 is likewise be transformed to visually represent changes in the underlying data. Display subsystem 208 includes one or more display devices utilizing virtually any type of display technology. In some examples, such display devices are combined with logic processor 202, volatile memory 204, and/or non-volatile storage device 206 in a shared enclosure. In other examples, such display devices are peripheral display devices.

When included, input subsystem 210 comprises or interfaces with one or more user-input devices such as a keyboard, mouse, touch screen, camera, or microphone.

When included, communication subsystem 212 is configured to communicatively couple various computing devices described herein with each other, and with other devices. Communication subsystem 212, for example, includes one or more wired and/or wireless communication devices compatible with one or more different communication protocols. As non-limiting examples, the communication subsystem is configured for communication via a wired or wireless local- or wide-area network, broadband cellular network, etc. In some embodiments, the communication subsystem allows computing system 200 to send and/or receive messages to and/or from other devices via a network such as the Internet.

Further, the disclosure comprises configurations according to the following clauses.

Clause 1. A computing system for evaluating a product requirement, comprising: a processor coupled to a memory that stores instructions, which, upon execution by the processor, cause the processor to: store input text of the product requirement; identify a requirement type for the input text from among a plurality of candidate requirement types; determine a plurality of required elements for the identified requirement type from among a plurality of candidate elements, using a predefined requirements rubric; perform natural language processing on the input text, using a natural language processing model, to thereby apply one or more tags from a predefined tagset to respective portions of the input text to generate tagged input text; apply one or more predefined element identification rules to the tagged input text, to thereby identify a presence or absence of each of the plurality of required elements in the input text for the product requirement; and output an indication of the identified presence or absence of each of the plurality of the required elements in the product requirement.

Clause 2. The computing system of Clause 1, wherein the product requirement is a product requirement for a target aerospace component, and the product requirement is selected from the group consisting of government rules, regulations, and contract requirements.

Clause 3. The computing system of any of Clauses 1-2, wherein the presence or absence of each of the plurality of required elements is indicated by a score.

Clause 4. The computing system of any of Clauses 1-3, wherein the requirement type is identified using a requirement type classifier that has been trained using a training data set that includes the input text from historical product requirements and ground truth data indicating the requirement type for each input text.

Clause 5. The computing system of any of Clauses 1-4, wherein the natural language processing further includes a keyword replacement and/or keyword identification.

Clause 6. The computing system of Clause 5, wherein the keyword identification identifies whether the input text contains a predetermined keyword.

Clause 7. The computing system of any of Clauses 1-5, wherein the outputted indication includes a report with a graph that indicates the identified presence or absence of each of the plurality of the required elements in the product requirement and non-compliance of the one or more predefined element identification rules.

Clause 8. The computing system of any of Clauses 1-7, wherein the plurality of candidate requirement types are selected from the group consisting of a functional requirement, design requirement, environmental requirement, and suitability requirement.

Clause 9. The computing system of any of Clauses 1-8, wherein the plurality of required elements are selected from the group consisting of an agent element, function element, output element, performance element, timing element, and condition element.

Clause 10. The computing system of any of Clauses 1-9, wherein the one or more predefined element identification rules include one or more of an ordering rule, a singularity rule, and/or a keyword rule.

Clause 11. A computerized method for evaluating a product requirement, comprising: storing input text of the product requirement; identifying a requirement type for the input text from among a plurality of candidate requirement types; determining a plurality of required elements for the identified requirement type from among a plurality of candidate elements, using a predefined requirements rubric; performing natural language processing on the input text, using a natural language processing model, to thereby apply one or more tags from a predefined tagset to respective portions of the input text to generate tagged input text; applying one or more predefined element identification rules to the tagged input text, to thereby identify a presence or absence of each of the plurality of required elements in the input text for the product requirement; and outputting an indication of the identified presence or absence of each of the plurality of the required elements in the product requirement.

Clause 12. The computerized method of Clause 11, wherein the product requirement is a product requirement for a target aerospace component, and the product requirement is selected from the group consisting of government rules, regulations, and contract requirements.

Clause 13. The computerized method of any of Clauses 11-12, wherein the presence or absence of each of the plurality of required elements is indicated by a score.

Clause 14. The computerized method of any of Clauses 11-13, wherein the requirement type is identified using a requirement type classifier that has been trained using a training data set that includes the input text from historical product requirements and ground truth data indicating the requirement type for each input text.

Clause 15. The computerized method of any of Clauses 11-14, wherein the natural language processing further includes a keyword replacement and/or keyword identification.

Clause 16. The computerized method of Clause 15, wherein the keyword identification identifies whether the input text contains a predetermined keyword.

Clause 17. The computerized method of any of Clauses 11-16, wherein the outputted indication includes a report with a graph that indicates the identified presence or absence of each of the plurality of the required elements in the product requirement and non-compliance of the one or more predefined element identification rules.

Clause 18. The computerized method of any of Clauses 11-17, wherein the plurality of candidate requirement types are selected from the group consisting of a functional requirement, design requirement, environmental requirement, and suitability requirement.

Clause 19. The computerized method of any of Clauses 11-18, wherein the plurality of required elements are selected from the group consisting of an agent element, function element, output element, performance element, timing element, and condition element.

Clause 20. The computerized method of any of Clauses 11-19, wherein the one or more predefined element identification rules include one or more of an ordering rule, a singularity rule, and/or a keyword rule.

## Claims

1. A computing system (100, 200) for evaluating a product requirement (26), comprising:
a processor (12) coupled to a memory (14) that stores instructions, which, upon execution by the processor (12), cause the processor (12) to:
store input text (24) of the product requirement (26);
identify a requirement type (50) for the input text (24) from among a plurality of candidate requirement types;
determine a plurality of required elements (60) for the identified requirement type (50) from among a plurality of candidate elements, using a predefined requirements rubric (48);
perform natural language processing on the input text (24), using a natural language processing model, to thereby apply one or more tags (56) from a predefined tagset (54) to respective portions of the input text (24) to generate tagged input text (58);
apply one or more predefined element identification rules (64) to the tagged input text (58), to thereby identify a presence or absence of each of the plurality of required elements (60) in the input text (24) for the product requirement (26); and
output an indication (74) of the identified presence or absence of each of the plurality of the required elements (60) in the product requirement (26).

2. The computing system (100, 200) of claim 1, wherein
the product requirement (26) is a product requirement (26) for a target aerospace component, and
the product requirement (26) is selected from the group consisting of government rules, regulations, and contract requirements.

3. The computing system (100, 200) of any preceding claim, wherein the presence or absence of each of the plurality of required elements (60) is indicated by a score (76).

4. The computing system (100, 200) of any preceding claim, wherein the requirement type (50) is identified using a requirement type classifier (40) that has been trained using a training data set that includes the input text (24) from historical product requirements and ground truth data indicating the requirement type (50) for each input text (24).

5. The computing system (100, 200) of any preceding claim, wherein the natural language processing further includes a keyword replacement and/or keyword identification.

6. The computing system (100, 200) of claim 5, wherein the keyword identification identifies whether the input text (24) contains a predetermined keyword.

7. The computing system (100, 200) of any preceding claim, wherein the outputted indication includes a report (81) with a graph (82) that indicates the identified presence or absence of each of the plurality of the required elements (60) in the product requirement (26) and non-compliance of the one or more predefined element identification rules (64).

8. The computing system (100, 200) of any preceding claim, wherein the plurality of candidate requirement types (50) are selected from the group consisting of a functional requirement, design requirement, environmental requirement, and suitability requirement.

9. The computing system (100, 200) of any preceding claim, wherein the plurality of required elements (60) are selected from the group consisting of an agent element, function element, output element, performance element, timing element, and condition element.

10. The computing system (100, 200) of any preceding claim, wherein the one or more predefined element identification rules (64) include one or more of an ordering rule, a singularity rule, and/or a keyword rule.

11. A computerized method (300) for evaluating a product requirement (26), comprising:
storing (302) input text (24) of the product requirement (26);
identifying (304) a requirement type (50) for the input text (24) from among a plurality of candidate requirement types;
determining (306) a plurality of required elements (60) for the identified requirement type (50) from among a plurality of candidate elements, using a predefined requirements rubric (48);
performing (308) natural language processing on the input text (24), using a natural language processing model, to thereby apply one or more tags (56) from a predefined tagset (54) to respective portions of the input text (24) to generate tagged input text (58);
applying (310) one or more predefined element identification rules (64) to the tagged input text (58), to thereby identify a presence or absence of each of the plurality of required elements (60) in the input text (24) for the product requirement (26); and
outputting (312) an indication (74) of the identified presence or absence of each of the plurality of the required elements (60) in the product requirement (26).

12. The computerized method (300) of claim 11, wherein
the product requirement (26) is a product requirement (26) for a target aerospace component, and
the product requirement (26) is selected from the group consisting of government rules, regulations, and contract requirements.

13. The computerized method (300) of claim 11 or 12, wherein the presence or absence of each of the plurality of required elements (60) is indicated by a score (76).

14. The computerized method (300) of any of claims 11 to 13, wherein the requirement type (50) is identified using a requirement type classifier (40) that has been trained using a training data set that includes the input text (24) from historical product requirements and ground truth data indicating the requirement type (50) for each input text (24).

15. The computerized method (300) of any of claims 11 to 14, wherein the natural language processing further includes a keyword replacement and/or keyword identification.
